# EUROPÄISCHE PATENTSCHRIFT

(11) **EP 2 542 433 B1**
(45) Veröffentlichungstag und Bekanntmachung des Hinweises auf die Patenterteilung: **06.08.2014**
(21) Anmeldenummer: 12712939.3
(22) Anmeldetag: 21.03.2012
(51) Int. Cl.: B60K 1/04

(54) **KONSTRUKTIONSBAUTEIL MIT EINER ELEKTROCHEMISCHEN ZELLE UND DESSEN HERSTELLUNGSVERFAHREN**
CONSTRUCTION COMPONENT HAVING AN ELECTROCHEMICAL CELL AND METHOD FOR PRODUCING SAME
ÉLÉMENT DE CONSTRUCTION POUR UNE CELLULE ÉLECTROCHIMIQUE ET PROCÉDÉ DE FABRICATION DE CET ÉLÉMENT

(30) Priorität: 28.03.2011 DE 102011015285
(43) Veröffentlichungstag der Anmeldung: 09.01.2013
(73) Patentinhaber: Li-Tec Battery GmbH, 01917 Kamenz (DE)
(72) Erfinder: SCHÄFER, Tim, 99768 Harztor (DE)
(74) Vertreter: Wallinger, Michael
(86) Internationale Anmeldenummer: PCT/EP2012/001237
(87) Internationale Veröffentlichungsnummer: WO 2012/130409

(56) Entgegenhaltungen:
- EP-A2- 1 195 315
- DE-A1-102008 029 200
- US-A- 5 156 225
- US-A- 5 378 555
- US-A- 5 833 023

## Beschreibung

Die Erfindung betrifft ein Verfahren zur Herstellung eines Konstruktionsbauteils für ein Fahrzeug mit einer Verbundstruktur, ein Konstruktionsbauteil für ein Fahrzeug mit einer Verbundstruktur sowie ein Fahrzeug mit einem entsprechenden Konstruktionsbauteil.

Elektrochemische Energiespeicher, im Folgenden auch als elektrochemische oder galvanische Zellen bezeichnet, werden häufig in der Form flacher, stapelbarer Einheiten hergestellt, aus denen durch Zusammenfassung einer Mehrzahl solcher Zellen so genannte Batterien für verschiedene Anwendungen hergestellt werden können. Insbesondere bei Fahrzeugen mit elektrischen Antrieben oder elektrischen Zusatzantrieben ist eine angemessene und unauffällige Unterbringung der teilweise voluminösen Batterien oder Akkumulatoren vorteilhaft.

Der vorliegenden Erfindung liegt somit die Aufgabe zugrunde, Nachteile und Beschränkungen bekannter Lösungen zu vermeiden oder zu überwinden.

Diese Aufgabe wird durch ein Verfahren zur Herstellung eines Konstruktionsbauteils für ein Fahrzeug nach Anspruch 1 oder 4, durch ein Konstruktionsbauteil für ein Fahrzeug nach Anspruch 8 und durch ein Fahrzeug mit einem Konstruktionsbauteil nach Anspruch 15 gelöst. Die Unteransprüche beziehen sich auf vorteilhafte Weiterbildungen der Erfindung.

Nach einem ersten Gesichtspunkt wird bei einem Verfahren zur Herstellung eines Konstruktionsbauteils für ein Fahrzeug mit einer Verbundstruktur, insbesondere einer Hohlzellenstruktur, wobei die Verbundstruktur mindestens eine Aufnahme aufweist, diese Aufgabe dadurch gelöst, dass das Verfahren einen Schritt des Einwebens einer elektrochemischen Zelle, insbesondere einer flachen elektrochemischen Zelle in die mindestens eine Aufnahme des Konstruktionsbauteils oder einen Schritt des Einwebens einer Anzahl elektrochemischer Zellen, insbesondere einer Anzahl flacher elektrochemischen Zellen in die mindestens eine Aufnahme des Konstruktionsbauteils aufweist. Ein Vorteil dieses Verfahrens liegt darin, dass Bereiche des Volumens der Konstruktionsbauteile zur Aufnahme der elektrochemischen Zellen genutzt werden können. Diese Volumina im Fahrzeug, z. B. im Motor-, Koffer- oder Passagierraum, werden somit für andere Zwecke verfügbar. Insbesondere kann der für die Batterien innerhalb des Fahrzeuges oder auf dem Dach oder in einem Anhänger vorgesehene Raum verringert oder sogar vollständig vermieden werden. Der in den Konstruktionsbauteilen vorhandene, bislang ungenutzte Raum kann somit einer Verwendung zugeführt werden. Ein anderer Vorteil dieses Verfahrens liegt darin, dass das Gewicht der Batterien auf vorteilhafte Weise auf die Fahrzeugstruktur verteilt werden kann. Ein weiter Vorteil dieses Verfahrens liegt darin, dass durch den Schritt des Einwebens der Energieeintrag während der Herstellung auf die elektrochemischen Zellen bzw. auf die Zellkörper der elektrochemischen Zellen verringert und somit deren Schädigungen vermieden werden können, wodurch auch die Sicherheit des Herstellungsverfahrens erhöht wird. Ein weiterer Vorteil liegt darin, dass durch die erhöhte Integration der elektrochemischen Zellen in das Konstruktionsbauteil die Wartung vereinfacht werden kann.

Unter einer elektrochemischen Zelle soll in diesem Zusammenhang ein elektrochemischer Energiespeicher verstanden werden, also eine Einrichtung, die Energie in chemischer Form speichern, in elektrischer Form an einen Verbraucher abgeben und vorzugsweise auch in elektrischer Form aus einer Ladeeinrichtung aufnehmen kann. Wichtige Beispiele für solche elektrochemischen Energiespeicher sind galvanische Zellen oder Brennstoffzellen.

Unter einer flachen elektrochemischen Zelle soll in diesem Zusammenhang eine elektrochemische Zelle verstanden werden, deren äußere Form durch zwei im wesentlichen parallele Flächen charakterisiert ist, deren senkrechter Abstand voneinander kürzer ist als die parallel zu diesen Flächen gemessene mittlere Länge der Zelle. Zwischen diesen Flächen sind, häufig umhüllt von einer Verpackung oder einem Zellgehäuse, die elektrochemisch aktiven Bestandteile der Zelle angeordnet. Solche Zellen sind häufig von einer mehrschichtigen Folienverpackung umgeben, die an den Rändern der Zellenverpackung eine Siegelnaht aufweist, die durch ein dauerhaftes Verbinden oder Schließen der Folienverpackung im Bereich der Siegelnaht gebildet ist. Derartige Zellen werden häufig auch als Pouch-Zellen oder als Coffeebag-Zellen bezeichnet.

Unter einem Konstruktionsbauteil soll in diesem Zusammenhang jede tragende oder verkleidende Baueinheit einer Karosserie des Fahrzeuges verstanden werden. Es kann sich z. B. um ein Rahmenbauteil oder ein Karosserieteil oder ein tragendes Karosserieteil einer selbsttragenden Karosserie handeln. Besonders bevorzugt weist das Konstruktionsbauteil eine flache Struktur auf und bildet insbesondere einen Kotflügel, einen Boden, eine Kofferraum- oder Motorraumklappe, eine Tür oder ein Dach des Fahrzeugs aus. Es ist jedoch auch denkbar, dass das Konstruktionsteil ein Rahmen, Schweller oder dergleichen ist.

Das Konstruktionsbauteil kann als ein Gelege und/oder als ein Gewebe aus einem kontinuierlichen Faden hergestellt werden. Vorzugsweise wird eine Matte in Gestalt des Konstruktionsbauteil gewoben. Es kann eine äußere Matte und eine innere Matte in Form des Konstruktionsbauteil gewoben oder gelegt oder gesponnen werden. Bevorzugt werden die Matten vor dem Einweben der elektrochemischen Zelle mit Harz getränkt und ausgehärtet.

In einer bevorzugten Ausführungsform weist das Konstruktionsbauteil ein Gurtmaterial auf, das vorzugsweise elastisch ist und in das die elektrochemischen Zellen eingewoben werden können. Ein Vorteil dieses Ausführungsbeispiels liegt darin, dass die elektrochemischen Zellen besonders gut vor Vibrationen geschützt werden können.

In einem besonders bevorzugten Ausführungsbeispiel können die elektrochemische Zellen derart in das Gurtmaterial gewoben werden, dass diese im Bedarfsfall, z. B. nach einem Unfall, aus dem Konstruktionsbauteil herausgenommen werden können. Vorzugsweise können somit die elektrochemischen Zellen in dem Konstruktionsbauteil herausnehmbar eingewoben worden sein.

Als Einweben einer elektrochemischen Zelle in die Aufnahme des Konstruktionsbauteiles soll in diesem Zusammenhang ein derartiges Einbringen der elektrochemischen Zelle in die Aufnahme verstanden werden, bei dem die elektrochemische Zelle z. B. durch Gurtmaterialien gehalten werden kann. Als Einweben einer elektrochemischen Zelle kann in diesem Zusammenhang nach einem weiteren Ausführungsbeispiel auch das Einbringen der elektrochemischen Zelle in eine Tasche in dem Konstruktionsbauteil verstanden werden. Nach einem weiteren Ausführungsbeispiel ist es auch möglich, dass die elektrochemische Zelle zwischen einer äußeren Matte und einer inneren Matte des Konstruktionsbauteil eingebracht wird und die äußere Matte und die innere Matte danach verbunden werden.

Besonders bevorzugt sind die elektrochemischen Zellen in ihrer Dicke der Dicke des Konstruktionsbauteiles angepasst, so dass das Volumen des Konstruktionsbauteiles besser ausgenutzt werden kann. Die elektrochemischen Zellen können auch in sich gekrümmt sein und so der Geometrie des Konstruktionsbauteiles folgen.

Weiterhin können die elektrochemischen Zellen zur Aufnahme von entstehenden Gasen eine dehnbare mehrschichtige Folie als äußere Umhüllung aufweisen.

Des Weiteren können die elektrochemischen Zellen teilflexibel bzw. biegeweich sein und durch das Konstruktionsbauteil wenigstens teilweise gestützt werden, um sich der Geometrie des Konstruktionsbauteiles besser anpassen zu können.

Außerdem können die elektrochemischen Zellen als prismatische Zellen, wie z. B. Rahmenflachzellen, Pouchzellen oder Coffeebag-Zellen, oder als Tellerzellen mit vergleichsweise großflächiger Ausdehnung ausgebildet sein. Die Ableiter und die Kontaktierungen können seitlich an bzw. von den elektrochemischen Zellen angeordnet sein. Ein Vorteil dieser Ausführung liegt darin, dass diese Verbindungsteile damit nicht zu einem Dickenauftrag beitragen und dass die Dicke der Konstruktionsbauteile besser für die Aufnahme der elektrochemischen Zellen ausgenutzt werden kann. In Größe und Form, insbesondere Flächenausdehnung und Dicke bzw. Querschnitt können die elektrochemischen Zellen an den innerhalb des Konstruktionsbauteiles vorhandenen Raum angepasst sein.

Als vorteilhaft hat es sich erwiesen, wenn bei dem Verfahren das Einweben einer Anzahl elektrochemischer Zellen dieser Schritt derartig durchgeführt wird, dass die Anzahl der elektrochemischen Zellen in der mindestens einen Aufnahme des Konstruktionsbauteils eine elektrisch verbundene Anordnung bildet, die in elektrischer und/oder elektronischer und/oder regelungstechnischer Hinsicht eine Stromversorgungseinheit bildet.

Des Weiteren kann das Verfahren mindestens einen der folgenden Schritte aufweisen: einen Schritt des Einbringens einer Sicherheitsvorrichtung in das Konstruktionsbauteil, die ausgestaltet ist, bei Auftreten einer vorbestimmten Bedingung die Stromversorgungseinheit von einem Energieversorgungssystem des Fahrzeuges zu trennen, oder einen Schritt des Einbringens einer Steuervorrichtung in das Konstruktionsbauteil, die zur Steuerung der elektrochemischen Zellen in dem Konstruktionsbauteil ausgestaltet ist. Die Sicherheitsvorrichtung kann z. B. einen Kaltleiter oder eine Stromunterbrechungseinheit aufweisen.

Nach zweiten Gesichtspunkt wird bei einem Verfahren zur Herstellung eines Konstruktionsbauteils für ein Fahrzeug mit einer Verbundstruktur, insbesondere einer Hohlzellenstruktur, wobei die Verbundstruktur mindestens eine Aufnahme aufweist, diese Aufgabe dadurch gelöst, dass das Verfahren einen Schritt des Einwebens eines Zellkörpers einer elektrochemischen Zelle in die mindestens eine Aufnahme des Konstruktionsbauteils oder Einweben einer Anzahl Zellkörper elektrochemischer Zellen in die mindestens eine Aufnahme des Konstruktionsbauteils aufweist.

Als vorteilhaft hat es sich erwiesen, wenn bei diesem Verfahren das Einweben einer Anzahl der Zellkörper der elektrochemischen Zellen derartig durchgeführt wird, dass die Anzahl der Zellkörper der elektrochemischen Zellen in der mindestens einen Aufnahme des Konstruktionsbauteils eine elektrisch verbundene Anordnung bildet, die in elektrischer und/oder elektronischer und/oder regelungstechnischer Hinsicht eine Stromversorgungseinheit bildet.

Als besonders vorteilhaft hat es sich erwiesen, wenn bei diesem Verfahren der in die Aufnahme des Konstruktionsbauteils eingebrachte Zellkörper Aktivelektroden der elektrochemischen Zellen aufweist und wenn das Verfahren einen Schritt des Füllens des Zellkörpers in der Aufnahme mit einem Elektrolyten und einen Schritt des Verwendens des Konstruktionsbauteils als einen Halter und/oder als einen Einsatz für nachfolgende Fertigungsschritte in der Zellenfertigung bis zu der Endbearbeitung der elektrochemischen Zellen aufweist

Bevorzugt weist das Verfahren mindestens einen der folgenden Schritte auf: einen Schritt des Einbringens einer Sicherheitsvorrichtung in das Konstruktionsbauteil, die ausgestaltet ist, bei Auftreten einer vorbestimmten Bedingung die Stromversorgungseinheit von einem Energieversorgungssystem des Fahrzeuges zu trennen oder einen Schritt des Einbringens einer Steuervorrichtung in das Konstruktionsbauteil, die zur Steuerung der elektrochemischen Zellen in dem Konstruktionsbauteil ausgestaltet ist.

Nach einem weiteren Gesichtspunkt wird die Aufgabe bei einem Konstruktionsbauteil für ein Fahrzeug mit einer Verbundstruktur, insbesondere einer Hohlzellenstruktur, wobei die Verbundstruktur mindestens eine Aufnahme aufweist, dadurch gelöst, dass in der mindestens einen Aufnahme mindestens ein elektrochemisches Bauteil aus einer Bauteilgruppe eingewoben worden ist, die aufweist: eine elektrochemische Zelle, ein Zellkörper einer elektrochemischen Zelle, eine Anzahl elektrochemischer Zellen oder eine Anzahl Zellkörper elektrochemischer Zellen.

Bevorzugt ist bei dem Konstruktionsbauteil eine Anzahl an elektrochemischen Zellen und/oder eine Anzahl Zellkörper elektrochemischer Zellen in dem Konstruktionsbauteil zu einer Anordnung derart elektrisch verbunden ist, dass diese in elektrischer und/oder elektronischer und/oder regelungstechnischer Hinsicht eine Stromversorgungseinheit bildet. Insbesondere kann diese Stromversorgungseinheit vorbestimmte elektrische Eigenschaften wie z. B. Spannung und Ladungsaufnahmevermögen aufweisen. Das Konstruktionsbauteil mit seinen elektrochemischen Zellen kann somit ein austauschbares Modul bilden, so dass nach z. B. einem Unfall ein beschädigtes Modul ausgetauscht werden kann, ohne dass andere Module aus elektrischer Sicht davon betroffen sind.

Besonders bevorzugt ist bei dem Konstruktionsbauteil die Stromversorgungseinheit zur Versorgung eines eindeutig zugeordneten Verbrauchers, vorzugsweise eines Elektromotors, insbesondere eines Radnabenmotors ausgestaltet. In dieser Ausführungsform sind die zu einer Stromversorgungseinheit zusammen geschalteten elektrochemischen Zellen eines Konstruktionsbauteiles einem bestimmten Verbraucher zugeordnet. Beispielsweise bilden ein rechter vorderer Kotflügel, eine Beifahrertür und ein vorderer Kofferraum- oder Motorraumdeckel drei Batteriemodule, die einem Nabenmotor des rechten Vorderrades zugeordnet sein können. Gleichermaßen bilden ein linker vorderer Kotflügel, eine Fahrertür und eine Bodenwanne drei Batteriemodule, die einem Nabenmotor des linken Vorderrades zugeordnet sein können. Ebenso bilden ein rechter hinterer Kotflügel, eine rechte Fahrgasttür und ein hinterer Kofferraum- oder Motorraumdeckel drei Batteriemodule, die einem Nabenmotor des rechten Hinterrades zugeordnet sein können. Ferner bilden ein linker hinterer Kotflügel, eine linke Fahrgasttür und ein Fahrzeugdach drei Batteriemodule, die einem Nabenmotor des linken Hinterrades zugeordnet sein können. Schließlich bilden Wände zwischen Koffer- bzw. Motorräumen, Rahmenteile, Stoßfänger und dergleichen Batteriemodule, die anderen Verbrauchern wie Beleuchtung, Heizung/Kühlung, Steuerung, Servolenkung, Navigation, Audio/Video, etc. zugeordnet sind. Dadurch ist es auch möglich, die Betriebssicherheit bei Ausfall oder Teilausfall eines solchen Moduls und dergleichen zu erhöhen.

Des Weiteren kann das Konstruktionsbauteil eine Sicherheitsvorrichtung aufweisen, die ausgestaltet ist, bei Auftreten einer vorbestimmten Bedingung die Stromversorgungseinheit von einem Energieversorgungssystem des Fahrzeuges zu trennen. Die vorbestimmte Bedingung kann z. B. eine äußere Beschädigung und/oder eine elektrische Fehlfunktion sein. So kann z. B. nach einem Unfall ein beschädigtes Modul aus dem elektrischen Verbund herausgenommen werden, ohne dadurch die anderen Module zu beeinträchtigen. Die anderen Module können gegebenenfalls die Aufgaben des ausgefallenen Moduls übernehmen. Um entscheiden zu können, ob die vorbestimmten Bedingungen vorliegen, sind vorzugsweise entsprechende Sensoren wie z. B. Temperaturfühler, Spannungsmesser, Dehnungsmesser vorgesehen.

Als vorteilhaft hat es sich erwiesen, wenn eine Steuervorrichtung zur Steuerung der elektrochemischen Zellen in dem Konstruktionsbauteil angeordnet ist.

Weiterhin kann eine zentrale Steuereinheit vorgesehen, eingerichtet und programmiert sein, um einen Ladungsausgleich zwischen Batteriemodulen bei Bedarf und anhand vorgegebener bzw. vorgebbarer Kriterien vorzunehmen. So kann z. B. bei Dunkelheit, insbesondere nachts, bei längeren Fahrten mit Licht, insbesondere Fern- und/oder Nebellicht, den der Beleuchtung zugeordneten Batteriemodulen Ladung von anderen Batteriemodulen zugeführt werden, wenn der Ladungszustand des der Beleuchtung zugeordneten Batteriemoduls eine vorgegebene Schwelle unterschreitet. Ebenso kann z. B. bei Fahrten in kalter Witterung den der Heizung zugeordneten Batteriemodulen Ladung von anderen Batteriemodulen zugeführt werden, wenn der Ladungszustand des der Heizung zugeordneten Batteriemoduls eine vorgegebene Schwelle unterschreitet. Ähnliche Kriterien sind für andere Batteriemodule aufstellbar.

Die Spannung eines Moduls ist begrenzbar bzw. begrenzt. Vorzugsweise liegt die Spannung eines Moduls zwischen 48 und 150 V, bei einem Leichtelektrofahrzeug zwischen 7,2 und 36 V. Die Spannung eines Moduls ist dabei eine Summe der Spannungen der Einzelzellen, die bei Lithiumsystemen z. B. 2,7 V oder 3,6 V bis hin zu 5 V betragen kann. Besonders bevorzugt ist die Spannung eines Moduls am Bedarf der maßgeblichen Verbraucher, insbesondere eines Radnabenmotors, ausgelegt.

Die elektrochemischen Zellen können als Binärzellen ausgebildet sein. Als Binärzellen werden Batteriezellen bezeichnet, welche wenigstens zwei Elektrodenstapel in einer gemeinsamen Einhausung aufweisen. Die zwei Elektrodenstapel sind vorzugsweise unterschiedlich, insbesondere mit unterschiedlichen elektrischen Eigenschaften, ausgebildet. Durch Binärzellen lassen sich gewünschte elektrische Eigenschaften in besonders kompakter Weise verwirklichen. Insbesondere ist es möglich, höhere Zellenspannungen als mit Einzelzellen zu erreichen. Bei Binärzellen sind Zellenspannungen bis etwa 12 V erreichbar.

Weiterhin können die elektrochemischen Zellen so ausgeführt sein, dass sie sich an die Form des Konstruktionsbauteiles anschmiegen. Insbesondere können die elektrochemischen Zellen biegeweich ausgebildet sein und kann die Einhausung großflächig an dem Konstruktionsbauteil anliegen. Ein Vorteil dieser Ausgestaltung liegt darin, dass das Konstruktionsbausteil die elektrochemischen Zellen stützen und teilweise als Zellenauflage dienen kann.

Des Weiteren kann die Einhausung der elektrochemischen Zellen aus einer dehnfähigen Folie ausgebildet sein. So können Volumenänderungen der Zelle, hervorgerufen durch Gasfreisetzungen in deren Innerem, aufgefangen werden. Ist zusätzlich im Konstruktionsbauteil Raum zur Ausdehnung vorgesehen, können Beschädigungen vermieden werden. Die Betriebssicherheit kann dadurch weiter erhöht werden. Die Flexibilität der Folie kann dabei abschnittweise gegeben sein. Die Flexibilität der Folie kann auch mit einer besonders dünnen Folie einhergehen. Da die Zellen durch das Konstruktionsbauteil gestützt werden, kann die Folie dünner sein als bei herkömmlichen Coffebag-Zellen oder dergleichen. Es wird ein Entgasungsraum gebildet, der aber nicht zur Kaskadenbeeinflussung der anderen Zellen führen kann, was insbesondere auch bei Einsatz von Binärzellen zutrifft. Das Verbundmaterial kann auch bei einem Zusammenstoß verhindern, dass Funkenbildung, Material oder heißes Gas aus einer zerstörten Batterie unkontrolliert frei wird, da es aufgefangen wird.

Vorzugsweise nutzen die in das Konstruktionsbauteil eingewobenen elektrochemischen Zellen das Konstruktionsbauteil als Wärmesenke.

Die Karosserieteile können anstelle einer Leichtbaustruktur auch in herkömmlicher Weise hergestellt sein. Z. B. kann ein Karosserieteil ein Außenblech, eine Innenverkleidung und eine Anzahl von Aussteifungen, etwa in Form von Rippen oder Stringern aufweisen. In diesem Fall können die elektrochemischen Zellen in den Zwischenräumen zwischen den Aussteifungen untergebracht oder angebracht sein.

Es können auch elektrochemischen Zellen verwendet werden, deren Ableiter bzw. Pole an einer oder beiden der Flachseiten der Zelle angeordnet sind. In diesem Fall können die Ableiter durch Flachkabel oder Bandkontaktierung kontaktiert sein. So kann der Dickenaufbau durch die Kontaktierung begrenzt werden.

Die vorstehenden Überlegungen sind darüber hinaus nicht nur auf elektrisch angetriebene Fahrzeuge beschränkt, sondern auch überall dort anwendbar, wo Elektroenergiespeicher mit einigem Raumbedarf anfallen und Konstruktionsbauteile zur Verfügung stehen, die wie oben beschrieben gestaltet werden können. Beispiele hierfür sind Elektroerzeugungs-, Verteil- und Versorgungsanlagen, wo z. B. Speicher- und Pufferbatterien in geeignet gestalteten Wänden, Böden, Decken, Podesten und dergleichen untergebracht werden können.

Neben Batterien bzw. Akkumulatoren sind auch Kondensatoren, Supercaps, Brennstoffzellen und dergleichen als Zellen zur Speicherung der Elektroenergie denkbar.

Nach einem anderen Gesichtspunkt wird die Aufgabe bei einem Fahrzeug mit einem elektrischen Antrieb durch vorstehend genannte Konstruktionsbauteile gelöst.

Das Fahrzeug weist Konstruktionsbauteile in Leichtbauweise auf. Als Konstruktionsbauteil im Sinne der Erfindung werden Tragstrukturteile, nichttragende Verkleidungsteile oder selbsttragenden Karosserieteile sein. Konstruktionsbauteile können insbesondere Türen, Motorraumdeckel, Kofferraumdeckel, Dächer, Kotflügel, Zwischenwände, Rahmenteile, Schweller sein. Die Leichtbauweise kann insbesondere durch eine Wabenstruktur oder eine Hohlzellenstruktur verwirklicht werden, welche einem durch eine Außenhaut bestimmten Volumen Stabilität verleiht.

Die Merkmale der beschriebenen und weiterer Ausführungsformen der Erfindung können in vorteilhafter Weise miteinander kombiniert werden, wodurch dem Fachmann weitere Ausführungsformen der Erfindung zur Verfügung stehen, die hier nicht abschließend und vollständig beschrieben werden können.

Im Folgenden wird die Erfindung anhand bevorzugter Ausführungsbeispiele und mit Hilfe von Figuren näher beschrieben. Dabei zeigt
- Fig. 1: ein Ablaufdiagramm eines Verfahrens zur Herstellung eines Konstruktionsbauteils nach einem ersten Ausführungsbeispiel,
- Fig. 2: ein Ablaufdiagramm eines Verfahrens zur Herstellung eines Konstruktionsbauteils nach einem zweiten Ausführungsbeispiel,
- Fig.3: ein Ablaufdiagramm eines Verfahrens zur Herstellung eines Konstruktionsbauteils nach einem dritten Ausführungsbeispiel und
- Fig.4: ein Ablaufdiagramm eines Verfahrens zur Herstellung eines Konstruktionsbauteils nach einem vierten Ausführungsbeispiel.

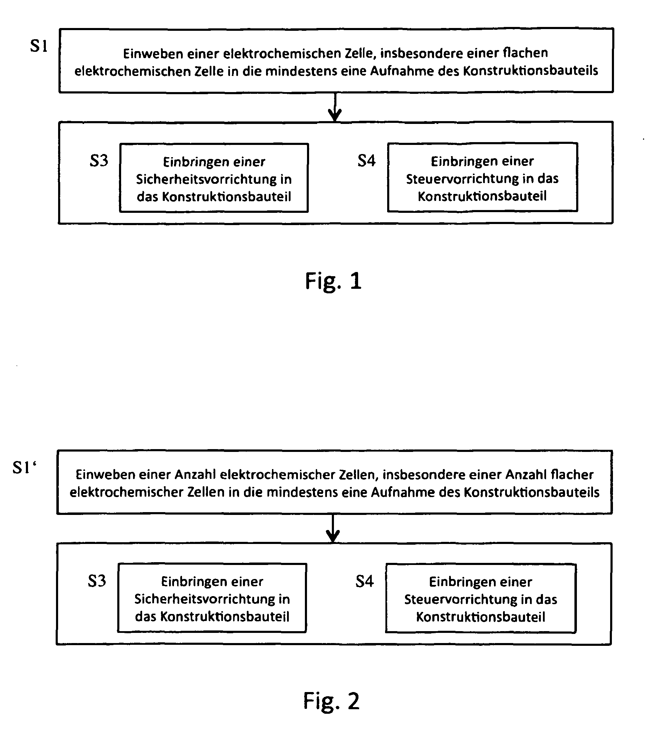

Fig. 1 zeigt ein Ablaufdiagramm eines Verfahrens zur Herstellung eines Konstruktionsbauteils für ein Fahrzeug mit einer Verbundstruktur, insbesondere einer Hohlzellenstruktur, wobei die Verbundstruktur mindestens eine Aufnahme aufweist, nach einem ersten Ausführungsbeispiel. In einem Schritt S1 wird eine elektrochemische Zelle, vorzugsweise eine flache elektrochemische Zelle, in die mindestens eine Aufnahme des Konstruktionsbauteils eingewoben. In einem Schritt S3 kann eine Sicherheitsvorrichtung in das Konstruktionsbauteil eingebracht werden, die ausgestaltet ist, bei Auftreten einer vorbestimmten Bedingung die elektrochemische Zelle von einem Energieversorgungssystem des Fahrzeuges zu trennen. Des Weiteren kann in einem Schritt S4 eine Steuervorrichtung zur Steuerung der elektrochemischen Zelle in das Konstruktionsbauteil eingebracht werden.

Fig. 2 zeigt ein Ablaufdiagramm eines Verfahrens zur Herstellung eines Konstruktionsbauteils für ein Fahrzeug mit einer Verbundstruktur, insbesondere einer Hohlzellenstruktur, wobei die Verbundstruktur mindestens eine Aufnahme aufweist, nach einem zweiten Ausführungsbeispiel. In einem Schritt S1' wird eine Anzahl elektrochemischer Zellen, vorzugsweise eine Anzahl flacher elektrochemischer Zellen, in die mindestens eine Aufnahme des Konstruktionsbauteils eingewoben. Der Schritt S1' des Einweben einer Anzahl elektrochemischer Zellen kann auf solch eine Weise durchgeführt werden, dass die Anzahl der elektrochemischen Zellen in der mindestens einen Aufnahme des Konstruktionsbauteils eine elektrisch verbundene Anordnung bildet, die in elektrischer und/oder elektronischer und/oder regelungstechnischer Hinsicht eine Stromversorgungseinheit bildet.

In einem Schritt S3 kann eine Sicherheitsvorrichtung in das Konstruktionsbauteil eingebracht werden, die ausgestaltet ist, bei Auftreten einer vorbestimmten Bedingung die Stromversorgungseinheit von einem Energieversorgungssystem des Fahrzeuges zu trennen. Des Weiteren kann in einem Schritt S4 eine Steuervorrichtung zur Steuerung der Stromversorgungseinheit in das Konstruktionsbauteil eingebracht werden.

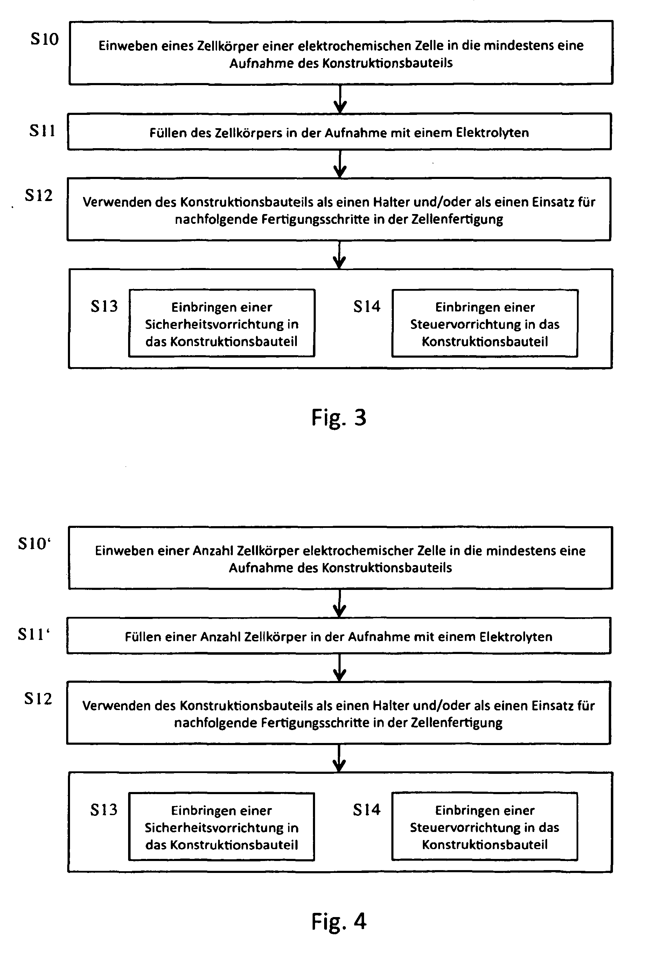

Fig. 3 zeigt ein Ablaufdiagramm eines Verfahrens zur Herstellung eines Konstruktionsbauteils für ein Fahrzeug mit einer Verbundstruktur, insbesondere einer Hohlzellenstruktur, wobei die Verbundstruktur mindestens eine Aufnahme aufweist, nach einem dritten Ausführungsbeispiel. In einem Schritt S10 wird ein Zellkörper einer elektrochemischen Zelle in die mindestens eine Aufnahme des Konstruktionsbauteils eingewoben. In einem Schritt S11 wird der Zellkörper in der Aufnahme mit einem Elektrolyten gefüllt und in einem Schritt S12 kann das Konstruktionsbauteil als einen Halter und/oder als einen Einsatz für nachfolgende Fertigungsschritte in der Zellenfertigung bis zu der Endbearbeitung der elektrochemische Zelle verwendet werden.

In einem Schritt S13 kann eine Sicherheitsvorrichtung in das Konstruktionsbauteil eingebracht werden, die ausgestaltet ist, bei Auftreten einer vorbestimmten Bedingung die elektrochemische Zelle von einem Energieversorgungssystem des Fahrzeuges zu trennen. Des Weiteren kann in einem Schritt S14 eine Steuervorrichtung zur Steuerung der elektrochemische Zelle in das Konstruktionsbauteil eingebracht werden.

Fig. 4 zeigt ein Ablaufdiagramm eines Verfahrens zur Herstellung eines Konstruktionsbauteils für ein Fahrzeug mit einer Verbundstruktur, insbesondere einer Hohlzellenstruktur, wobei die Verbundstruktur mindestens eine Aufnahme aufweist, nach einem vierten Ausführungsbeispiel. In einem Schritt S10' wird eine Anzahl an Zellkörpern elektrochemischer Zellen in die mindestens eine Aufnahme des Konstruktionsbauteils eingewoben. Der Schritt S10' des Einweben einer Anzahl an Zellkörpern an elektrochemischen Zellen kann auf solch eine Weise durchgeführt werden, dass die Anzahl der sich daraus ergebenden elektrochemischen Zellen in der mindestens einen Aufnahme des Konstruktionsbauteils eine elektrisch verbundene Anordnung bildet, die in elektrischer und/oder elektronischer und/oder regelungstechnischer Hinsicht eine Stromversorgungseinheit bildet.

In einem Schritt S11' wird die Anzahl der Zellkörper in der Aufnahme mit einem Elektrolyten gefüllt und in einem Schritt S12 wird das Konstruktionsbauteil als einen Halter und/oder als einen Einsatz für nachfolgende Fertigungsschritte in der Zellenfertigung bis zu der Endbearbeitung der elektrochemischen Zellen verwendet.

In einem Schritt S13 kann eine Sicherheitsvorrichtung in das Konstruktionsbauteil eingebracht werden, die ausgestaltet ist, bei Auftreten einer vorbestimmten Bedingung die Stromversorgungseinheit von einem Energieversorgungssystem des Fahrzeuges zu trennen. Des Weiteren kann in einem Schritt S14 eine Steuervorrichtung zur Steuerung der Stromversorgungseinheit in das Konstruktionsbauteil eingebracht werden.

### Bezugszeichenliste

- S1: Einweben einer elektrochemischen Zelle
- S1': Einweben einer Anzahl elektrochemischer Zellen
- S3: Einbringen einer Sicherheitsvorrichtung in das Konstruktionsbauteil
- S4: Einbringen einer Steuervorrichtung in das Konstruktionsbauteil
- S10: Einweben eines Zellkörpers einer elektrochemischen Zelle
- S10': Einweben einer Anzahl Zellkörper elektrochemischer Zellen
- S11: Füllen des Zellkörpers in der Aufnahme mit einem Elektrolyten
- S11': Füllen der Anzahl der Zellkörper in der Aufnahme mit einem Elektrolyten
- S12: Verwenden des Konstruktionsbauteils als einen Halter und/oder als einen Einsatz für nachfolgende Fertigungsschritte in der Zellenfertigung
- S13: Einbringen einer Sicherheitsvorrichtung in das Konstruktionsbauteil
- S14: Einbringen einer Steuervorrichtung in das Konstruktionsbauteil

## Patentansprüche

1. Verfahren zur Herstellung eines Konstruktionsbauteils für ein Fahrzeug mit einer Verbundstruktur, insbesondere einer Hohlzellenstruktur, wobei die Verbundstruktur mindestens eine Aufnahme aufweist, **dadurch gekennzeichnet, dass** das Verfahren den Schritt aufweist:
(S1) Einweben einer elektrochemischen Zelle, insbesondere einer flachen elektrochemischen Zelle in die mindestens eine Aufnahme des Konstruktionsbauteils oder (S1') Einweben einer Anzahl elektrochemischer Zellen, insbesondere einer Anzahl flacher elektrochemischer Zellen in die mindestens eine Aufnahme des Konstruktionsbauteils.

2. Verfahren nach Anspruch 1, **dadurch gekennzeichnet, dass** bei dem Einweben einer Anzahl elektrochemischer Zellen dieser Schritt (S1') derartig durchgeführt wird, dass die Anzahl der elektrochemischen Zellen in der mindestens einen Aufnahme des Konstruktionsbauteils eine elektrisch verbundene Anordnung bildet, die in elektrischer und/oder elektronischer und/oder regelungstechnischer Hinsicht eine Stromversorgungseinheit bildet.

3. Verfahren nach Anspruch 2, **dadurch gekennzeichnet, dass** das Verfahren mindestens einen der folgenden Schritte aufweist:
(S3) Einbringen einer Sicherheitsvorrichtung in das Konstruktionsbauteil, die ausgestaltet ist, bei Auftreten einer vorbestimmten Bedingung die Stromversorgungseinheit von einem Energieversorgungssystem des Fahrzeuges zu trennen, oder
(S4) Einbringen einer Steuervorrichtung in das Konstruktionsbauteil, die zur Steuerung der elektrochemischen Zellen in dem Konstruktionsbauteil ausgestaltet ist.

4. Verfahren zur Herstellung eines Konstruktionsbauteils für ein Fahrzeug mit einer Verbundstruktur, insbesondere einer Hohlzellenstruktur, wobei die Verbundstruktur mindestens eine Aufnahme aufweist, **dadurch gekennzeichnet, dass** das Verfahren den Schritt aufweist:
(S10) Einweben eines Zellkörpers einer elektrochemischen Zelle in die mindestens eine Aufnahme des Konstruktionsbauteils oder (S10') Einweben einer Anzahl Zellkörper elektrochemischer Zellen in die mindestens eine Aufnahme des Konstruktionsbauteils.

5. Verfahren nach Anspruch 3, **dadurch gekennzeichnet, dass** bei dem Einweben einer Anzahl der Zellkörper der elektrochemischen Zellen der Schritt (S10') derartig durchgeführt wird, dass die Anzahl der Zellkörper der elektrochemischen Zellen in der mindestens einen Aufnahme des Konstruktionsbauteils eine elektrisch verbundene Anordnung bildet, die in elektrischer und/oder elektronischer und/oder regelungstechnischer Hinsicht eine Stromversorgungseinheit bildet.

6. Verfahren nach Anspruch 4 oder 5, **dadurch gekennzeichnet, dass** der im Schritt (S10) bzw. die in dem Schritt (S10') in die Aufnahme des Konstruktionsbauteils eingebrachten Zellkörper Aktivelektroden der elektrochemischen Zellen aufweist und dass das Verfahren die Schritte aufweist:
(S11) Füllen des Zellkörpers in der Aufnahme mit einem Elektrolyten und
(S12) Verwenden des Konstruktionsbauteils als einen Halter und/oder als einen Einsatz für nachfolgende Fertigungsschritte in der Zellenfertigung bis zu der Endbearbeitung der elektrochemischen Zellen.

7. Verfahren nach einem der Ansprüche 4 bis 6, **dadurch gekennzeichnet, dass** das Verfahren mindestens einen der folgenden Schritte aufweist:
(S13) Einbringen einer Sicherheitsvorrichtung in das Konstruktionsbauteil, die ausgestaltet ist, bei Auftreten einer vorbestimmten Bedingung die Stromversorgungseinheit von einem Energieversorgungssystem des Fahrzeuges zu trennen oder
(S14) Einbringen einer Steuervorrichtung in das Konstruktionsbauteil, die zur Steuerung der elektrochemischen Zellen in dem Konstruktionsbauteil ausgestaltet ist.

8. Konstruktionsbauteil für ein Fahrzeug mit einer Verbundstruktur, insbesondere einer Hohlzellenstruktur, wobei die Verbundstruktur mindestens eine Aufnahme aufweist, **dadurch gekennzeichnet, dass** in der mindestens einen Aufnahme mindestens ein elektrochemisches Bauteil aus einer Bauteilgruppe eingewoben worden ist, die aufweist:
- eine elektrochemische Zelle,
- ein Zellkörper einer elektrochemischen Zelle,
- eine Anzahl elektrochemischer Zellen oder
- eine Anzahl Zellkörper elektrochemischer Zellen.

9. Konstruktionsbauteil nach Anspruch 8, **dadurch gekennzeichnet, dass** eine Anzahl an elektrochemischen Zellen und/oder eine Anzahl Zellkörper elektrochemischer Zellen in dem Konstruktionsbauteil zu einer Anordnung derart elektrisch verbunden ist, dass diese in elektrischer und/oder elektronischer und/oder regelungstechnischer Hinsicht eine Stromversorgungseinheit bildet,

10. Konstruktionsbauteil nach Anspruch 9, **dadurch gekennzeichnet, dass** die Stromversorgungseinheit zur Versorgung eines eindeutig zugeordneten Verbrauchers, vorzugsweise eines Elektromotors, insbesondere eines Radnabenmotors ausgestaltet ist.

11. Konstruktionsbauteil nach Anspruch 9 oder 10, **gekennzeichnet durch** eine Sicherheitsvorrichtung, die ausgestaltet ist, bei Auftreten einer vorbestimmten Bedingung die Stromversorgungseinheit von einem Energieversorgungssystem des Fahrzeuges zu trennen.

12. Konstruktionsbauteil nach einem der Ansprüche 9 bis 11, **dadurch gekennzeichnet, dass** eine Steuervorrichtung zur Steuerung der elektrochemischen Zellen in dem Konstruktionsbauteil angeordnet ist.

13. Konstruktionsbauteil nach einem der Ansprüche 8 bis 12, **dadurch gekennzeichnet, dass** das Konstruktionsbauteil ein flaches Bauteil aufweist.

14. Konstruktionsbauteil nach Anspruch 13, **dadurch gekennzeichnet, dass** das flache Bauteil aus einer Bauteilgruppe ausgewählt worden ist, die aufweist:
- Kotflügel,
- Boden,
- Kofferraumklappe,
- Motorraumklappe,
- Tür,
- Dach,
- Rahmen oder
- Schweller.

15. Fahrzeug mit einem elektrischen Antrieb, **gekennzeichnet durch** wenigstens ein Konstruktionsbauteil nach einem der Ansprüche 8 bis 14.

## Claims

1. A method for producing a structural component for a vehicle having a composite structure, particularly a hollow cell structure, wherein the composite structure comprises at least one receiving member, **characterized in that** the method comprises the step:
(S1) weaving an electrochemical cell, particularly a flat electrochemical cell, into the at least one receiving member of the structural component or (S1') weaving a number of electrochemical cells, particularly a number of flat electrochemical cells, into the at least one receiving member of the structural component.

2. The method according to claim 1, **characterized in that** the number of electrochemical cells in said step (S1') are woven in such that the number of electrochemical cells form an electrically connected assembly in the at least one receiving member of the structural component which forms a power supply unit in an electrical and/or electronic and/or technical control regard.

3. The method according to claim 2, **characterized in that** the method comprises at least one of the following steps:
(S3) introducing a safety apparatus into the structural component which is designed to separate the power supply unit from an energy supply system of the vehicle upon a predetermined condition occurring, or
(S4) introducing a control apparatus into the structural component which is designed to control the electrochemical cells in the structural component.

4. A method for producing a structural component for a vehicle having a composite structure, particularly a hollow cell structure, wherein the composite structure comprises at least one receiving member, **characterized in that** the method comprises the step:
(S10) weaving a cell body of an electrochemical cell into the at least one receiving member of the structural component or (S10') weaving a number of cell bodies of electrochemical cells into the at least one receiving member of the structural component.

5. The method according to claim 3, **characterized in that** the number of cell bodies of the electrochemical cells in said step (S10') are woven in such that the number of cell bodies of the electrochemical cells form an electrically connected assembly in the at least one receiving member of the structural component which forms a power supply unit in an electrical and/or electronic and/or technical control regard.

6. The method according to claim 4 or 5, **characterized in that** the cell body introduced into the receiving member of the structural component in step (S10) or step (S10') comprise active electrodes of the electrochemical cells and that the method comprises the steps:
(S11) filling the cell body in the receiving member with an electrolyte, and
(S12) using the structural component as a holder and/or as an insert for the subsequent steps of cell manufacture up until completion of the finished electrochemical cells.

7. The method according to one of claims 4 to 6, **characterized in that** the method comprises at least one of the following steps:
(S13) introducing a safety apparatus into the structural component which is designed to separate the power supply unit from an energy supply system of the vehicle upon a predetermined condition occurring, or
(S14) introducing a control apparatus into the structural component which is designed to control the electrochemical cells in the structural component.

8. A structural component for a vehicle having a composite structure, particularly a hollow cell structure, wherein the composite structure comprises at least one receiving member, **characterized in that** woven into the at least one receiving member is at least one electrochemical component from a group of components comprising:
□ an electrochemical cell,
□ a cell body of an electrochemical cell,
□ a number of electrochemical cells, or
□ a number of cell bodies of electrochemical cells.

9. The structural component according to claim 8, **characterized in that** a number of electrochemical cells and/or a number of cell bodies of electrochemical cells are electrically connected into an assembly in the structural component so as to form a power supply unit in the electrical and/or electronic and/or technical control regard.

10. The structural component according to claim 9, **characterized in that** the power supply unit is designed to supply a clearly assigned load, preferably an electric motor, in particular an in-wheel motor.

11. The structural component according to claim 9 or 10, **characterized by** a safety apparatus which is designed to separate the power supply unit from an energy supply system of the vehicle upon a predetermined condition occurring.

12. The structural component according to any one of claims 9 to 11, **characterized in that** a control apparatus for controlling the electrochemical cells is arranged in the structural component.

13. The structural component according to any one of claims 8 to 12, **characterized in that** the structural component comprises a flat component.

14. The structural component according to claim 13, **characterized in that** the flat component is selected from a group of components comprising:
□ mudguard,
□ floor panel,
□ boot lid,
□ bonnet,
□ door,
□ roof,
□ frame, or
□ door sill.

15. A vehicle having an electric drive, **characterized by** at least one structural component in accordance with any one of claims 8 to 14.

## Revendications

1. Procédé de fabrication d'un composant de construction pour un véhicule avec une structure composite, en particulier une structure à cellules creuses, la structure composite comportant au moins un logement, **caractérisé en ce que** ledit procédé comprend l'étape :
(S1) d'incorporation d'une cellule électrochimique, en particulier d'une cellule électrochimique plate dans le ou les logements du composant de construction ou (S1') d'incorporation d'un certain nombre de cellules électrochimiques, en particulier d'un certain nombre de cellules électrochimiques plates dans le ou les logements du composant de construction.

2. Procédé selon la revendication 1, **caractérisé en ce que**, lors de l'incorporation d'un certain nombre de cellules électrochimiques, ladite étape (S1') est exécutée de telle manière qu'un certain nombre de cellules électrochimiques forme un dispositif électriquement connecté dans le ou les logements du composant de construction, lequel constitue une unité d'alimentation en courant sous l'aspect électrique et/ou électronique et/ou de la technique de régulation.

3. Procédé selon la revendication 2, **caractérisé en ce que** le procédé comprend au moins une des étapes suivantes :
(S3) de mise en place d'un dispositif de sécurité dans le composant de construction, lequel est prévu pour isoler l'unité d'alimentation en courant d'un système d'alimentation en énergie du véhicule, à l'apparition d'une condition définie, ou
(S4) de mise en place d'un dispositif de commande dans le composant de construction, lequel est prévu pour commander les cellules électrochimiques dans le composant de construction.

4. Procédé de fabrication d'un composant de construction pour un véhicule avec une structure composite, en particulier une structure à cellules creuses, la structure composite comportant au moins un logement, **caractérisé en ce que** ledit procédé comprend l'étape :
(S10) d'incorporation d'un corps cellulaire d'une cellule électrochimique dans le ou les logements du composant de construction ou (S10') d'incorporation d'un certain nombre de corps cellulaires de cellules électrochimiques dans le ou les logements du composant de construction.

5. Procédé selon la revendication 3, **caractérisé en ce que**, lors de l'incorporation d'un certain nombre de corps cellulaires des cellules électrochimiques, ladite étape (S10') est exécutée de telle manière qu'un certain nombre des corps cellulaires des cellules électrochimiques forment un dispositif électriquement connecté dans le ou les logements du composant de construction, lequel constitue une unité d'alimentation en courant sous l'aspect électrique et/ou électronique et/ou de la technique de régulation.

6. Procédé selon la revendication 4 ou 5, **caractérisé en ce que** le corps cellulaire mis en place dans le ou les logements du composant de construction lors de l'étape (S10) ou de l'étape (S10') comporte des électrodes actives des cellules électrochimiques, et **en ce que** ledit procédé comprend les étapes :
(S11) de remplissage par un électrolyte du corps cellulaire dans le ou les logements, et
(S12) d'utilisation du composant de construction en tant que support et/ou en tant qu'insert pour des étapes de fabrication consécutives de la fabrication cellulaire jusqu'au traitement final des cellules électrochimiques.

7. Procédé selon l'une des revendications 4 à 6, **caractérisé en ce que** ledit procédé comprend au moins l'une des étapes suivantes :
(S13) de mise en place d'un dispositif de sécurité dans le composant de construction, lequel est prévu pour isoler l'unité d'alimentation en courant d'un système d'alimentation en énergie du véhicule, à l'apparition d'une condition définie, ou
(S14) de mise en place d'un dispositif de commande dans le composant de construction, lequel est prévu pour commander les cellules électrochimiques dans le composant de construction.

8. Composant de construction pour un véhicule avec une structure composite, en particulier une structure à cellules creuses, la structure composite comportant au moins un logement, **caractérisé en ce qu'**au moins un composant électrochimique d'un groupe de composants a été incorporé dans le ou les logements, lequel comporte :
- une cellule électrochimique,
- un corps cellulaire d'une cellule électrochimique,
- un certain nombre de cellules électrochimiques ou
- un certain nombre de corps cellulaires de cellules électrochimiques.

9. Composant de construction selon la revendication 8, **caractérisé en ce qu'**un certain nombre de cellules électrochimiques et/ou un certain nombre de corps cellulaire de cellules électrochimiques sont électriquement reliés en formant un dispositif dans le composant de construction, de manière à constituer une unité d'alimentation en courant sous l'aspect électrique et/ou électronique et/ou de la technique de régulation.

10. Composant de construction selon la revendication 9, **caractérisé en ce que** l'unité d'alimentation en courant est prévue pour alimenter un récepteur associé de manière univoque, préférentiellement un moteur électrique, en particulier un moteur sur moyeu de roue.

11. Composant de construction selon la revendication 9 ou 10, **caractérisé par** un dispositif de sécurité, prévu pour isoler l'unité d'alimentation en courant d'un système d'alimentation en énergie du véhicule, à l'apparition d'une condition définie.

12. Composant de construction selon l'une des revendications 9 à 11, **caractérisé en ce qu'**un dispositif de commande est disposé dans le composant de construction pour commander les cellules électrochimiques.

13. Composant de construction selon l'une des revendications 8 à 12, **caractérisé en ce que** le composant de construction comporte un composant plat.

14. Composant de construction selon la revendication 13, **caractérisé en ce que** le composant plat est sélectionné dans un groupe de composants comprenant :
- une aile de carrosserie,
- un plancher,
- un hayon de coffre,
- un capot de compartiment moteur,
- une porte,
- un toit,
- un châssis, ou
- un bas de caisse.

15. Véhicule à transmission électrique, **caractérisé par** au moins un composant de construction selon l'une des revendications 8 à 14.
